# EUROPEAN PATENT APPLICATION

(11) **EP 4 603 270 A1**
(43) Date of publication of application: **20.08.2025**
(21) Application number: 24157605.7
(22) Date of filing: 14.02.2024
(51) Int. Cl.: B32B 1/00, B32B 25/02, B32B 25/04, B32B 25/12, B32B 25/14, B32B 25/16

(54) **EXPANSION JOINT FOR NATURAL GAS-HYDROGEN AND AVIATION FUEL APPLICATIONS**

(71) Applicant: ContiTech Deutschland GmbH, 30175 Hannover (DE)
(72) Inventor: KÜHLTAU, Martin, 30175 Hannover (DE); VARGA, István, 30175 Hannover (DE); EGGERS, Steffen, 30175 Hannover (DE); BRAUN, Patrik, 30175 Hannover (DE); SICKING, Lilly, 30175 Hannover (DE)
(74) Representative: Preusser, Andrea

(57) **Abstract**

The present invention relates to a bellow for a rubber expansion joint, comprising an inner rubber layer based on epichlorohydrin rubber, an outer rubber layer, a textile reinforcement layer between the inner rubber layer and the outer rubber layer comprising one or more textile reinforcement plies including threads. The present invention further relates to a method for the manufacture of such a bellow, the use of such a bellow, and a rubber expansion joint comprising such a bellow.

## Description

### Technical field

The present invention relates to a bellow for a rubber expansion joint, comprising an inner rubber layer, an outer rubber layer and a textile reinforcement layer between the inner rubber layer and the outer rubber layer comprising one or more textile reinforcement plies. The present invention further relates to a method for the manufacture of the bellow, the use of the bellow, and a rubber expansion joint comprising the bellow.

### State of the art

Today, rubber expansion joints are in use for different gas applications, such as natural gas (operating pressure up to 20 bar) or fuels. In these applications, the inner rubber layer is in direct contact with the gas or fuel. Hence, the inner rubber layer needs to be chemically resistant and act as a permeation barrier. According to the prior art, the inner rubber layer is typically made from nitrile butadiene rubber (NBR).

Usually several layers of reinforcement cord are located between the inner rubber layer and an outer rubber layer to ensure that high pressures inside the expansion joint can be withstood. On the other side of the reinforcement layers, an outer rubber layer is located, which is resistant against the environmental influences, such as UV-radiation or ozone.

NBR as the rubber inner layer is not an optimal material for hydrogen containing gases in terms of hydrogen permeation resistance. Hence, a significant amount of hydrogen will be lost during use due to its permeation through the rubber layer making such expansion joints unsuitable for gas mixtures including hydrogen at elevated pressures and temperatures (the higher pressure and temperature, the faster permeation).

Furthermore, NBR is not optimal in view of chemical resistance requirements, e.g. with respect to fuel pollution, fuel coating and fuel-soluble matter (DIN EN ISO 1825).

Moreover, for safety reasons, a burst pressure of 5 times the maximum operating pressure is required in hydrogen applications (see ISO 19880-5, Gaseous hydrogen - Fueling stations, Part 5 : Dispenser hoses and hose assemblies, first edition 2019-11) and aviation fuel applications, which exceeds the burst pressure of many typical expansion joint designs. For instance, applications with a maximum operating pressure of 20 bar would require a minimum burst pressure of 100 bar.

The inventors are not aware of any rubber expansion joints being used for gas mixtures including natural gas and hydrogen (hydrogen content in the gas mix of up to 100%) or aviation fuel, up to pressure of 20 bar or higher.

### Description of the invention

Accordingly, there is a need for a bellow for a rubber expansion joint overcoming the problems of the prior art as discussed above. In particular, the object of the invention was to provide a bellow for a rubber expansion joint, which exhibits a high hydrogen permeation resistance and good chemically resistance to fuels, in particular aviation fuels. At the same time, the bellow should reveal a high burst pressure.

The inventors found that the use of epichlorohydrin rubber for the inner rubber layer could provide a bellow which achieves good hydrogen permeation resistance and chemical resistance. Additionally, an elevated burst pressure level can be achieved by adjustment of the textile reinforcement layer, e.g. based on the number of plies and/or mesh density, angle between the different plies. In this regard, the textile reinforcement layer preferably comprises multiple textile plies.

Accordingly, the invention relates to a bellow for a rubber expansion joint, comprising
an inner rubber layer based on epichlorohydrin rubber,
an outer rubber layer,
a textile reinforcement layer between the inner rubber layer and the outer rubber layer comprising one or more textile reinforcement plies including threads embedded in a rubber ply.

The inventive bellow for a rubber expansion joint shows a high hydrogen permeation resistance and high chemical resistance, in particular with respect to fuels such as aviation fuels.

The lower hydrogen permeation leads to lower loss of valuable gas making the gas transport more efficient, sustainable, and safe in that no undesired and dangerous accumulation of hydrogen in adjacent areas is caused. The inventive bellows also exhibit an aviation fuel resistance satisfying the requirements according to DIN EN ISO 1825. At present, there is no rubber expansion joint for aviation fuel with a certificate according to DIN EN ISO 1825.

Additionally, the inventive bellow for a rubber expansion joint can achieve a high burst pressure such as 100 bar or more, which improves safety. The inventive bellow can also have good antistatic properties, which is important for materials in contact with inflammable fluids.

Low hydrogen permeability and good elasticity, in particular good elasticity at low temperatures, are conflicting goals for materials. The inventive bellow provides an optimal balance between these conflicting requirements. In particular, this balance can be gradually adjusted by the chlorine content of the epichlorohydrin rubber, e.g. by using a suitable epichlorohydrin polymer or a suitable blend of epichlorohydrin polymers for the epichlorohydrin rubber.

In the following, the invention is described in further detail.

The invention relates to a bellow for a rubber expansion joint. Rubber expansion joints are elastomer products serving as compensating elements for thermal expansion and relative movement in e.g. pipelines, containers and machines. Rubber expansion joints comprise a bellow as the rubber component to which usually connectors, such as flanges, are mounted at both ends. The bellow is generally provided with metal rings or metal bead rings such as steel bead rings embedded at the top and bottom end of the bellow to achieve fitting and fixation in the flanges. The implementation into the respective system such as pipelines, containers and machines, can be accomplished by the connectors and optionally other means. Rubber expansion joints can e.g. reduce tension, isolate noise and vibrations, absorb thermal expansion or building subsidence and compensate for misalignments during installation.

Since the bellow is usually the most relevant part of the rubber expansion joint, the term rubber expansion joint sometimes refers to the bellow only.

The inventive bellow for a rubber expansion joint comprises an inner rubber layer based on epichlorohydrin rubber. The inner rubber layer is the layer that comes into contact with a fluid during operation, when a fluid such as a gas or a liquid such as fuel passes through the rubber expansion joint.

The inner rubber layer is based on epichlorohydrin rubber. The epichlorohydrin rubber can be selected from epichlorohydrin homopolymers, epichlorohydrin copolymers or blends thereof. Epichlorohydrin copolymers are copolymers of epichlorohydrin and one or more co-monomers, preferably one or two co-monomers. An epichlorohydrin copolymer with one co-monomer is called epichlorohydrin bipolymer. An epichlorohydrin copolymer with two co-monomers is called epichlorohydrin terpolymer.

The co-monomers are generally monomers including an epoxide group and are preferably free from chlorine. Preferred examples of co-monomers are ethylene oxide and allyl glycidyl ether (AGE).

Preferred examples of epichlorohydrin bipolymers are bipolymers of epichlorohydrin and ethylene oxide (ECO) and bipolymers of epichlorohydrin and allyl glycidyl ether. Preferred examples of epichlorohydrin terpolymers are terpolymers of epichlorohydrin, ethylene oxide and a further co-monomer, preferably terpolymers of epichlorohydrin, ethylene oxide and allyl glycidyl ether.

In a preferred embodiment, the epichlorohydrin rubber can be selected from epichlorohydrin homopolymers, epichlorohydrin bipolymers, epichlorohydrin terpolymers, or blends thereof, wherein the bipolymer is preferably a bipolymer of epichlorohydrin and ethylene oxide (ECO) or a bipolymer of epichlorohydrin and allyl glycidyl ether, more preferably ECO, and the terpolymer is preferably a terpolymer of epichlorohydrin, ethylene oxide and allyl glycidyl ether.

The amount of allyl glycidyl ether in the terpolymer of epichlorohydrin, ethylene oxide and allyl glycidyl ether may be in the range of 2 to 8 % by weight, preferably about 5 % by weight.

The blend may be for instance a blend of a homopolymer and a bipolymer, a blend of a homopolymer and a tripolymer, a blend of a bipolymer and a tripolymer, or a blend of a homopolymer, a bipolymer, and a tripolymer.

The chlorine content of the bipolymers and terpolymers obviously depend on the ratio of the amount of epichlorohydrin vs. the amount of the co-monomers.

The inner rubber layer is based on epichlorohydrin rubber. This means that the main or only rubber component of the inner rubber layer is epichlorohydrin rubber. For instance, the proportion of epichlorohydrin rubber as rubber component in the inner rubber layer may be in the range of 75 to 100 phr, preferably 90 to 100 phr, more preferably 100 phr epichlorohydrin rubber (i.e. in this case the inner rubber layer includes only epichlorohydrin rubber as the rubber component). The term phr means parts per hundred parts rubber.

Epichlorhydrin rubbers are commercially available. They can be generally prepared by polymerization of epichlorhydrin or mixtures of epichlorohydrin and one or more co-monomers. The chemical and/or physical properties depend inter alia on the ratio of epichlorhydrin to co-monomer(s), if any, and hence on the chlorine content and the average molecular mass or viscosity, respectively.

In a preferred embodiment, the chlorine content of the epichlorohydrin rubber is in the range of 15 wt.% to 40 wt.%, more preferably 20 wt.% to 40 wt.%, even more preferably 30 wt.% to 35 wt.%, based on the weight of the epichlorohydrin rubber. For instance, the chlorine content can be adjusted by using a epichlorohydrine rubber comprising epichlorohydrine copolymer(s) with co-monomers free of chlorine in a selected ratio.

Through a higher chlorine content within said ranges, the permeation resistance is generally improved. The reason is that the (molecular) free volume is reduced which slows down the diffusion rate. At the same time, this reduces the low temperature flexibility (increased glass transition temperature).

Cold flexibility is negatively affected by increasing chlorine content (glass transition temperature rises because of reduced free volume). This limits applicability of the bellows or expansion joint, respectively, at low temperatures because elasticity is not given at temperatures close to or below glass transition temperature. Glass transition temperature of the expansion joint and inner rubber layer should be well below -20 °C, preferably below -25 °C.

The chemical resistance towards fluids such as aviation fuel is given for epichlorohydrine in general because of its polarity. This is also given for a relatively low Cl content (e.g. by high ethylene oxide content).

Hence, a chlorine content as given above can give a suitable balance of (hydrogen) permeation resistance and flexibility, in particular low temperature flexibility. However, depending on the intended application, a chlorine content in the lower or higher region of the ranges mentioned may be more suitable.

Thus, with respect to applications for hydrogen containing gases a high Cl content is more appropriate since the focus is on (hydrogen) permeation resistance. On the other hand, applications for fuels, in particular aviation fuels, a low Cl content is more appropriate since the focus is on low temperature flexibility. In the example described below, bellows for aviation fuel applications are prepared so that a pretty low Cl content in the epichlorohydrin is used, because a high low temperature flexibility is required.

The inner rubber layer is formed by vulcanization of an epichlorohydrin rubber compound comprising the epichlorohydrin rubber and usually one or more additives, which are commonly used in rubber compounds.

An additive generally contained in the epichlorohydrin rubber compound is a curative. Examples are sulfur-based curatives, curatives enabling cure via the Cl moieties by a substitution reaction pathway or peroxide curatives. For instance, epichlorohyrin bipolymers or terpolymers including allyl glycidyl ether can be suitable cured by means of a sulfur-based curative or a peroxide curative. Generally, peroxide curatives are preferred since a peroxide cure has proven to be much faster and hence more economically feasible than a sulfur cure or cure via the Cl moieties.

Examples of further additives in the inner rubber layer or the epichlorohydrin rubber compound, respectively, are fillers, processing auxiliaries, plasticizers, stabilizers such as aging stabilizer, fibers, coloring agents or combinations thereof. Reference is made to the general art of rubber compound technology.

The inner rubber layer or the epichlorohydrin rubber compound usually contains at least one filler, preferably mineral filler, e.g. one or two fillers, preferably mineral fillers. The fillers may be also designated reinforcing fillers. The filler may have a non-platelet-like shape, such as a sphere-like shape, or a platelet-like shape. In a preferred embodiment, the inner rubber layer or the epichlorohydrin rubber compound contains at least one filler having a platelet-like shape.

Besides mechanical considerations, such as hardness, stiffness, tensile and tear strength, an increased filler content generally increases the impermeability of the rubber. The filler particles are less permeable compared to the rubber phase due to the significantly lower free volume within the filler. Thus, the impermeability of the rubber is dependent on the volume fraction of the filler. The addition of fillers with platelet-like morphologies increases the impermeability of the rubber because the diffusion path of the migrating fluids through the material is increased compared to common fillers with a rather spherical structure, such as carbon black or silica.

In a particularly preferred embodiment, the inner rubber layer or the epichlorohydrin rubber compound contains at least one non-platelet-like filler, preferably a sphere-like filler, and at least one platelet-like filler.

The non-platelet-like filler, preferably spherical filler, such as carbon black or silica, improves mechanical strength and, in the case of carbon black, antistatic properties. The platelet-like filler, preferably mineral filler, improves impermeability.

Examples of suitable non-platelet-like fillers, in particular spherical fillers, or platelet-like fillers are selected from carbon black, graphite, carbon nanotubes (CNTs), silica, calcium and aluminum silicates, kieselguhr, kaolin, lamellar phyllosilicates, such as montmorillonite, chlorite, limestone, zeolites, cyclodextrins, feldspar, talc, chalk, alumina gel, aluminum oxide, silicon carbide, mica, magnetite, zinc oxide, core/shell fillers, asphalt, hard rubber dust, chlorides, carbonates, sulfates, oxides and hydroxides of alkali metals and alkaline earth metals, Al(OH)₃ , PVC, polymer powder (e.g. PE or PTFE powder), glass beads, each of which may be used alone or in combination of two or more thereof. Mineral fillers are preferred.

A preferred non-platelet-like filler, in general a spherical filler, is carbon black. Preferred fillers having a platelet-like shape are kaolin, talc, lamellar phyllosilicates, such as montmorillonite, or mixtures thereof. The mixtures may be of natural origin.

The total amount of the at least one filler in the inner rubber layer or epichlorohydrin rubber compound may be e.g. in the range of 20 to 120 phr, preferably 50 to 90 phr. As mentioned, the total amount of the at least one filler preferably includes at least one non-platelet-like filler, preferably a spherical filler, and at least one platelet-like filler.

In a preferred embodiment, the inner rubber layer or the epichlorohydrin rubber compound is free from plasticizer. In a further preferred embodiment, the inner rubber layer or the epichlorohydrin rubber compound includes at least one of carbon black for antistatic properties, and CaO as acid acceptor.

The inner rubber layer has preferably a hardness of 55 to 80 ShA, more preferably of 60 to 75 ShA. ShA refers to the Shore A hardness which can be measured with a Shore durometer according to DIN ISO 48-1 and DIN ISO 48-2.

The inventive bellow for a rubber expansion joint further comprises an outer rubber layer. The outer rubber layer can be based on any common rubber or blend of rubbers. The outer rubber layer should have a sufficient temperature resistance, resistance towards UV light and ozone, and mechanical strength.

There is preferably a permeability gradient along the cross section of the bellow so that the outer rubber layer has a higher permeability than the inner rubber layer. It is preferred that the permeability of the outer rubber layer is at least five times higher than the permeability of the inner rubber layer, e.g. the permeability with respect to hydrogen or natural gas.

Examples of suitable rubbers for the outer rubber layer are ethylene-propylene copolymer (EPM), ethylene-propylene-diene monomer copolymer (EPDM), nitrile butadiene rubber (NBR), (partially) hydrogenated nitrile butadiene rubber (HNBR), fluoro rubber (FPM or FKM), chloroprene rubber (CR), natural rubber (NR), styrene-butadiene rubber (SBR), isoprene rubber (IR), butyl rubber (IIR), bromobutyl rubber (BIIR), chlorobutyl rubber (CIIR), butadiene rubber (BR), chlorinated polyethylene (CM), chlorosulfonated polyethylene (CSM), ethylenevinyl acetate rubber (EVA), acrylate rubber (ACM), silicone rubber (MVQ), acrylate-ethylene rubber (AEM), fluorinated methylsilicone rubber (MFQ), perfluoro rubber (FFPM or FFKM), polyurethane (PU) or blends of two or more thereof.

In a preferred embodiment, the outer rubber layer is based on a rubber selected from chloroprene rubber (CR), styrene-butadiene rubber (SBR), ethylene-propylene-diene monomer copolymer (EPDM), nitrile butadiene rubber (NBR), (partially) hydrogenated nitrile butadiene rubber (HNBR), acrylate-ethylene rubber (AEM) or blends thereof, more preferably chloroprene rubber.

The outer rubber layer or the respective rubber compound with which the outer rubber layer is formed by vulcanization may optionally contain one or more additives, which are commonly used in rubber compounds. An additive generally contained is a curative. Examples are sulfur-based curatives, or peroxide curatives. In case of CR rubber, the curatives are systems containing ZnO, MgO and potentially further sulfur-containing accelerators. Examples of further additives are fillers, processing auxiliaries, plasticizers, stabilizers such as aging stabilizer, fibers, coloring agents or mixtures thereof. Reference is made to the general art of rubber compound technology.

Examples of suitable fillers for the outer rubber layer are the same mentioned above for the inner rubber layer so that reference is made thereto. The filler may have a non-platelet-like shape, such as a sphere-like shape. The at least one filler preferably comprises carbon black. In a preferred embodiment, the outer rubber layer or the respective rubber compound contains at least one filler having a non-platelet-like filler such as carbon black and a platelet-like filler. Preferred examples for the platelet-like filler are the same as mentioned above for the inner rubber layer so that reference is made thereto.

The inventive bellow for a rubber expansion joint further comprises a textile reinforcement layer between the inner rubber layer and the outer rubber layer. The textile reinforcement layer comprises one or more, preferably more than one, textile reinforcement plies including threads also termed cords. The terms threads and cords are used here interchangeably. Each textile reinforcement ply is a rubber ply in which the threads are embedded.

It is preferred that the textile reinforcement layer comprises more than one textile reinforcement ply. The textile reinforcement layer may e.g. comprise 2 to 15 textile reinforcement plies, preferably 2 to 8 textile reinforcement plies, and more preferably 4 to 6 textile reinforcement plies.

Each textile reinforcement ply comprises threads or cords, respectively, embedded in a rubber layer or ply. The threads can be oriented in the textile reinforcement ply unidirectionally, bidirectionally or multidirectionally. Preferably, the threads are oriented unidirectionally.

If the threads in each textile reinforcement ply are oriented unidirectionally and the bellow contains more than one textile reinforcement ply, the orientation of the threads in two adjacent plies is preferably angled, e.g. in an angle of 40 to 90°. For instance, with respect to the length direction of the bellow (from one open end to the other open end) the threads in a first textile reinforcement ply are in an angle of 35° and the threads of an adjacent second textile reinforcement ply is in an angle of -35°. As a result, the threads of the first and second ply are oriented to each other with an angle of 70°:
The rubber layer or rubber ply, respectively, in which the threads are embedded is based on a rubber or usually on a blend of rubbers. The rubber ply preferably comprises (partially) hydrogenated nitrile butadiene rubber (HNBR) and/or nitrile butadiene rubber (NBR).

In a preferred embodiment, the rubber ply in which the threads are embedded comprises i) HNBR and/or NBR, ii) epichlorohydrin rubber, preferably ECO, and (iii) if the outer rubber layer does not contain HNBR or NBR, a rubber also contained in the outer rubber layer, such as chloroprene rubber (CR), styrene-butadiene rubber, ethylene-propylene-diene monomer copolymer, acrylate-ethylene rubber. In a particular preferred embodiment, the rubber ply in which the threads are embedded comprises CR, ECO and HNBR.

The rubber blend used for the rubber ply should satisfy the following requirements:
1) Adhere sufficiently to the threads (general requirement)
2) Match in polarity with the inner and outer rubber layer to maintain a sufficient adhesion (general requirement)
3) Have a sufficiently high gas permeability to maintain the required gradient from inner to outer layer (application-specific requirement, see above for outer rubber layer)
4) Have a sufficiently high electric conductivity to maintain antistatic behavior and transmission of electrostatic charges from inner to outer rubber layer (application-specific requirement)

In view of the last requirement, the rubber plies preferably contain carbon black. Other additives may be included. A curative may be included in the unvulcanized rubber ply.

The thread density in each textile reinforcement ply may be in the range of 75 thr/10 cm to 200 thr/10 cm, preferably 100 thr/10 cm to 150 thr/10 cm. The unit "thr/10 cm" refers to the number of threads per 10 cm of the textile reinforcement ply.

The threads can be made of any fibers used for such applications. In a preferred embodiment, the threads or cords, respectively, are made of fibers of polyamide, aramide, polyesters, polyetheretherketon, cotton or combinations thereof. Preferably, the threads are made of fibers of polyamide, such as polyamide 6.6 (PA 6.6, nylon), aramide or combinations thereof.

The inventive bellow for a rubber expansion joint may further comprise inlays, like PTFE inlays. The inlays may be thermoplastic inlays. Such an additional inlay may further tune the bellows properties, such as increasing the chemical resistance (e.g. PTFE) or increasing the permeation barrier such as polyketone or ethylene vinyl alcohol (EVOH).

The bursting strength or burst pressure of the inventive bellow for a rubber expansion joint inter alia depends on the adhesion between the rubber and the threads, the adhesion of the rubbers to each another, the type of threads, the thread density and the number of textile reinforcement plies so that these parameters can be adjusted according to the needs. Another possibility is to use more resistant types of threads, e.g. change the textile material (threads) from polyamide, such as PA6.6 (nylon), or polyester to aramide.

The wall thickness of the bellow can be e.g. in the range of 0.3 to 5.0 cm, preferably from 0.5 to 3.0 cm, more preferably around 1 cm. The diameter of the bellow may be for instance in the range of 32 to 3500 mm or 32 to 1000 mm, preferably of 50 to 350 mm, more preferably 60 to 250 mm. The diameter refers to the nominal diameter (DN).

A suitable layer thickness for the inner rubber layer is in the range from 0.05 to 1.0 cm. A suitable layer thickness for the outer rubber layer is in the range from 0.05 to 1.0 cm. A suitable layer thickness for each of the textile reinforcement plies is in the range of from 0.05 to 1.0 cm. In a preferred embodiment, the layer thickness of each of the inner rubber layer, the outer rubber layer and each of the textile reinforcement plies is in the range of from 0.05 to 1.0 cm. Each of the inner rubber layer, the outer rubber layer and each of the textile reinforcement plies may have the same or different layer thickness.

Both open ends of the bellow are usually provided with a metal ring or metal bead ring, which is preferably a steel ring or steel bead ring, respectively. These rings serve to achieve fitting and fixation in the connectors, such as flanges. The metal ring or metal bead ring may be made from a metal wire, a bundle of metal wires or a metal rope, respectively, wherein the metal is preferably steel.

The metal ring or metal bead ring is generally located in circumferential direction at both open ends of the bellow in which the metal ring or metal bead ring is embedded (a ring at one open end and a ring at the other open end). For this purpose, the open ends of the bellow preferably form a bead or pocket in which the metal ring or metal bead ring is hosted.

The bellow can have e.g. an angular, such as squared, rectangular or triangular, or round shape in the cross-section. Preferably, the bellow has a round shape in the cross-section.

The invention is also directed to a method for the manufacture of a bellow for a rubber expansion joint, which comprises the following steps:
a) preparing one or more textile reinforcement plies by embedding threads into a unvulcanised rubber compound, preferably via a calender process,
b) laying the one or more textile reinforcement plies onto an unvulcanised epichlorohydrin rubber compound sheet for the inner rubber layer,
c) laying an unvulcanised rubber compound sheet for the outer rubber layer onto the laid one or more textile reinforcement plies to form an arrangement,
b) vulcanizing the arrangement to form the bellow.

Preferably, the unvulcanised epichlorohydrin rubber sheet for the inner rubber layer is made via calendering or extrusion, preferably calendering, of a epichlorohydrin rubber compound. Preferably, the unvulcanised rubber sheet for the outer rubber layer is made via calendering of a respective rubber compound.

The inventive method is preferably a method for the manufacture of an inventive bellow for a rubber expansion joint according to the invention as described above.

All aspects, proportions and embodiments described above for the inventive bellow also apply to the inventive method so that reference is made thereto.

In the inventive method, the threads in each textile reinforcement ply are preferably oriented unidirectionally. If more than one textile reinforcement ply is laid on each other, it is preferred that the orientation of the threads of two adjacent plies is angled, e.g. in an angle of 40 to 90°.

The vulcanization of the arrangement can be carried out according to the methods known to a person skilled in the art in the field of rubber technology. Of course, before vulcanization, the arrangement shall be in or brought into the desired form of the bellow.

The invention is also directed to the use of a bellow for a rubber expansion joint according to the invention as described above for the transport of a gas or a fuel.

All aspects, proportions and embodiments described above for the inventive bellow or the inventive method also apply to the inventive use so that reference is made thereto.

In a preferred embodiment, the gas transported through the bellow for a rubber expansion joint is a gas containing hydrogen. The hydrogen containing gas may be hydrogen (100%) or a mixture of hydrogen and at least one other gas, more preferably a mixture of hydrogen and natural gas. Other suitable fluids are gas mixtures such as explosive gas mixtures or fuels where low permeability and/or antistatic properties are required.

The fuel transported through the bellow for a rubber expansion joint is preferably an aviation fuel, such as a sustainable aviation fuel (SAF). Aviation fuels are used to power aircraft and are usually petroleum-based fuels, or petroleum and synthetic fuel blends. Examples for aviation fuels are kerosene or naphtakerosene blends. In the mid-/long-term future, the aviation fuel could also be hydrogen.

The bellow for a rubber expansion joint according to the invention can be used for operating pressures of up to 25 bar, relative, or even higher, e.g.at an operating pressure in the range of 0 to 30 bar, relative, or 0 to 25 bar, relative, preferably 0 to 20 bar, relative, more preferably 1 to 16 bar, relative.

The bellow for a rubber expansion joint according to the invention is preferably used at an operating temperature in the range of -40 °C to 100 °C, more preferably in the range of -20 °C to 65 °C.

At lower temperatures, the layers of the bellow may become brittle, increasing the chance of fatal failure, cracks or mechanical damage, making it easier for gasses, such as hydrogen, to permeate. At higher temperatures, the layers of the bellow may become more permeable, less chemically resistant towards fuels and more inflammable through self-ignition of the gasses or fuels.

The invention is also directed to a rubber expansion joint, comprising the bellow according to the invention as described above. The inventive rubber expansion joint is generally provided with connectors such as flanges mounted at both ends of the bellow, where metal rings or metal bead rings are preferably embedded as discussed above.

The invention is further described in the following example, which is exemplary and not intended to limit the scope of the invention in any way.

### Example

Bellows for rubber expansion joints having a diameter of 80, 100 and 150 mm (DN80, DN100, DN150) were prepared. The bellows contain in this order an inner rubber layer based on an epichlorohydrin ethylenoxide allyl glycidyl ether terpolymer rubber, a textile reinforcement layer composed of six reinforcement plies each containing polyamide-6.6 threads embedded in a rubber layer (thread density of 120 thr/10 cm per ply), and an outer rubber layer made from CR.

The terpolymer has a chlorine content of 21 wt.%. The inner rubber layer has a hardness of 70 ShA. The inner rubber layer contains 25 phr of platelet-like filler (mixture of natural talc and chlorite with high aspect ratio). The vulcanization of the bellow is effected by peroxide cure. The rubber layer in which the threads are embedded comprises CR, epichlorohydrine ethylene oxide copolymer (ECO) and HNBR.

Each of the open ends of the bellow is provided with a ring formed by a steel bundle of stainless steel (e.g. stainless steel 1.4404 or 1.0530) embedded in the bellow.

The hydrogen permeation rate of the bellows with a diameter of 100 mm was tested according to ISO 19880-5 and a hydrogen permeation rate at 25 bar of 2.4 × 10⁻⁵ mbar L/s at an operating temperature of 22 °C and 1.4 × 10⁻⁴ mbar L/s at an operating temperature of 62 °C was measured.

Moreover, the burst pressure of the prepared bellow having a diameter of 80 mm was tested. A burst pressure of > 100 bar was determined.

## Claims

1. A bellow for a rubber expansion joint, comprising
an inner rubber layer based on epichlorohydrin rubber,
an outer rubber layer,
a textile reinforcement layer between the inner rubber layer and the outer rubber layer comprising one or more textile reinforcement plies including threads embedded in a rubber ply.

2. The bellow for a rubber expansion joint according to claim 1, wherein the chlorine content of the epichlorohydrin rubber is in the range of 10 wt.% to 40 wt.%, preferably 20 wt.% to 40 wt.%, more preferably 30 wt.% to 35 wt.%.

3. The bellow for a rubber expansion joint according to claim 1 or claim 2, wherein the epichlorohydrin rubber is selected from epichlorohydrin homopolymers, epichlorohydrin bipolymers, epichlorohydrin terpolymers, or blends thereof, wherein the bipolymer is preferably a bipolymer of epichlorohydrin and ethylene oxide or a bipolymer of epichlorohydrin and allyl glycidyl ether, and the terpolymer is preferably a terpolymer of epichlorohydrin, ethylene oxide and allyl glycidyl ether.

4. The bellow for a rubber expansion joint according to any one of the preceding claims, wherein the inner rubber layer contains at least one filler, preferably at least one mineral filler, wherein the inner rubber layer preferably contains at least one platelet-like filler or a combination of at least one non-platelet-like filler and at least one platelet-like filler.

5. The bellow for a rubber expansion joint according to any one of the preceding claims, wherein the textile reinforcement layer comprises 2 to 15, preferably 2 to 8, more preferably 4 to 6, textile reinforcement plies.

6. The bellow for a rubber expansion joint according to any one of the preceding claims,
wherein each textile reinforcement ply comprises threads embedded in a rubber ply, wherein the threads are oriented unidirectionally, and/or
wherein the thread density in each textile reinforcement ply is in the range of 75 thr/10 cm to 200 thr/10 cm, preferably 100 thr/10 cm to 150 thr/10 cm.

7. The bellow for a rubber expansion joint according to any one of the preceding claims, wherein the threads are made of fibers of polyamide, aramide, polyester, polyetheretherketon, cotton or combinations thereof.

8. The bellow for a rubber expansion joint according to any one of the preceding claims, wherein the outer rubber layer is based on a rubber selected from chloroprene rubber (CR), styrene-butadiene rubber (SBR), ethylene-propylene-diene monomer copolymer (EPDM), (partially) hydrogenated nitrile butadiene rubber (HNBR), nitrile butadiene rubber (NBR), acrylate-ethylene rubber (AEM), chlorosulfonated polyethylene (CSM), acrylate rubber (ACM), butyl rubber (IIR), butadiene rubber (BR), natural rubber (NR) or blends thereof, preferably CR.

9. The bellow for a rubber expansion joint according to any one of the preceding claims, wherein
the wall thickness of the bellow is in the range of 0.3 to 5.0 cm, preferably from 0.5 to 3.0 cm, more preferably around 1 cm, and/or
the layer thickness of each of the inner rubber layer, the outer rubber layer and each of the textile reinforcement plies is in the range of from 0.05 to 1.0 cm.

10. The bellow for a rubber expansion joint according to any one of the preceding claims, wherein the inner rubber layer is free from plasticizer and/or the inner rubber layer includes at least one of carbon black for antistatic properties, and CaO as acid acceptor.

11. A method for the manufacture of a bellow for a rubber expansion joint, preferably a bellow according to any one of claims 1 to 10, comprising the following steps:
a) preparing one or more textile reinforcement plies by embedding threads into a unvulcanised rubber compound, preferably via a calender process,
b) laying the one or more textile reinforcement plies onto an unvulcanised epichlorohydrin rubber sheet for the inner rubber layer,
c) laying an unvulcanised rubber sheet for the outer rubber layer onto the laid one or more textile reinforcement plies to form an arrangement,
b) vulcanizing the arrangement to form the bellow, preferably by peroxide cure.

12. The method according to claim 11, wherein the threads in each textile reinforcement ply are oriented unidirectionally, wherein more than one textile reinforcement plies are preferably laid on each other so that the orientation of the threads of two adjacent plies is angled.

13. Use of a bellow for a rubber expansion joint according to any one of claims 1 to 10 for the transport of a gas or a fuel, wherein the gas preferably contains hydrogen, more preferably a mixture of hydrogen and natural gas, and the fuel is preferably an aviation fuel.

14. The use according to claim 13, wherein the operating pressure in the bellow is in the range of 0 to 30 bar, relative, or 0 to 25 bar, relative, preferably 0 to 20 bar, relative, more preferably 1 to 16 bar, relative.

15. A rubber expansion joint, comprising a bellow according to any one of claims 1 to 10.
